## Europäisches Patentamt
## European Patent Office
## Office européen des brevets

(19)

(11) Numéro de publication: **0 012 635**
**B1**

(12) **FASCICULE DE BREVET EUROPEEN**

(45) Date de publication du fascicule du brevet: **28.07.82**

(51) Int. Cl.³: **C 09 K 11/465, H 01 J 29/20**

(21) Numéro de dépôt: **79400812.8**

(22) Date de dépôt: **31.10.79**

(54) Substances luminescentes constituées par des thiogallates alcalino-terreux, procédé pour leur préparation et leur application.

(30) Priorité: **15.12.78 FR 7835330**

(43) Date de publication de la demande:
**25.06.80 Bulletin 80/13**

(45) Mention de la délivrance du brevet:
**28.07.82 Bulletin 82/30**

(84) Etats contractants désignés:
**BE DE FR GB IT NL**

(56) Documents cités:
**FR - A - 2 054 602**
**FR - A - 2 205 737**

**CHEMICAL ABSTRACTS, vol. 88, 1978, abrégé no. 31120k, page 534 Columbus, Ohio, US**
**DERWENT JAPANESE PATENTS REPORTS, vol. U, no. 52, 29 janvier 1974, section L, page 2**

Le dossier contient des informations techniques présentées postérieurement au dépôt de la demande et ne figurant pas dans le présent fascicule.

(73) Titulaire: **RHONE-POULENC INDUSTRIES**
**22 Avenue Montaigne**
**F-75008 Paris (FR)**

(72) Inventeur: **Dougier, Patrick**
**34, avenue de l'Europe**
**F-78160 - Marly/Le/Roi (FR)**

(74) Mandataire: **Savina, Jacques et al,**
**RHONE-POULENC RECHERCHES Service Brevets Chimie et Polymères 25, Quai Paul Doumer**
**F-92408 Courbevoie Cedex (FR)**

Substances luminescentes constituées per des thiogallates alcalino-terreux, procédé pour leur préparation et leur application

La présente invention a pour objet de nouvelles substances luminescentes et leur procédé de préparation; elle concerne plus particulièrement des thiogallates alcalino-terreux activés par l'europium.

On connait dans l'art antérieur des thiogallates alcalino-terreux activés par l'europium. C'est ainsi que la demande de brevet français n° 70.24259, publiée sous le numéro 2 054 602, décrit des compositions représentées par la formule:

$$R_{1-w} Ga_2 S_4 : A_w$$

dans laquelle R est au moins un métal alcalino-terreux et A est choisi parmi le groupe comprenant l'europium, le plomb et le calcium, w étant un nombre choisi de manière à produire la luminescence recherchée quand la composition est soumise à une radiation incidente. Ces compositions de l'art antérieur sont cathodoluminescentes et photoluminescentes et présentent une large plage d'émission colorée s'étendant sur tout le spectre visible. Les thiogallates trivalents de calcium, strontium et baryum activés par l'europium divalent émettent dans le jaune, le vert et le bleu vert respectivement.

On connait également dans l'art antérieur une composition luminescente constituée de silicate de zinc activé au manganèse divalent de formule $Zn_2 Si O_4 : Mn^{2+}$ connue plus généralement sous l'appellation poudre Jedec P1.

Cette poudre Jedec P 1 et les thiogallates décrits dans la demande précitée sont tous deux utilisables dans les écrans cathodoluminescents multichromes. La poudre Jedec P 1 présente une chromaticité permettant d'augmenter la capacité de reproduction des couleurs dans ces systèmes et une bonne saturation de la couleur d'émission. En revanche, elle présente une intensité insuffisante et une persistance qui peut être gênante dans certains cas d'application.

Les thiogallates activés à l'europium cités plus hauts permettent de disposer également d'une composition présentant une chromaticité voisine de celle de la poudre Jedec P 1. Ils ont pour avantage par rapport à cette dernière, de présenter une persistance lumineuse relativement brève (la luminescence ne persiste que durant un très court laps de temps après cessation du stimulus d'excitation). Cependant, l'inconvénient majeur de ce type de produits est qu'il présente toujours une intensité insuffisante, pour la plupart des applications.

La présente invention a pour but de fournir une composition qui présente une bonne chromaticité, une persistance brève et une intensité d'émission élevée.

L'invention a donc pour objet une nouvelle substance luminescente alcalino-terreux constituée par un thiogallate activé par l'europium, caractérisée en ce qu'elle répond à la formule générale

$$[(M_{1-y} Mg_y)_{1-d} \cdot a(Ga_{1-z} B_z)_2] X_{1+3a} : Eu_d \quad (I)$$

dans laquelle

M représente au moins un élément alcalino-terreux choisi parmi le groupe comprenant Ca, Sr et Ba.

y est supérieur ou égal à 0 et inférieur ou égal à 0,7 ($0,0 \leqslant y \leqslant 0,7$)

a est supérieur ou égal à 0,8 et est différent de 1 quand y=0

z est supérieur ou égal à 0 et inférieur ou égal à y ($0 \leqslant z \leqslant y$)

X représente le soufre ou un mélage de soufre et d'oxygène et d est un nombre choisi de manière à produire la luminescence recherchée quand la substance luminescente est soumise à une énergie incidente excitatrice.

Un autre objet de l'invention est une substance telle que définie ci-dessus dans laquelle:

y est supérieur ou égal à 0,10 et inférieur ou égal à 0,50 ($0,10 \leqslant y \leqslant 0,50$)

a=1

z=y et

d est compris entre 0,005 et 0,20.

Selon un mode de réalisation particulier de l'invention M représente $Sr_{1-x} Ba_x$ avec $0 \leqslant x \leqslant 1$.

Un autre objet de l'invention est une substance luminescente répondant à la formule:

$$[[(Sr_{0,8} Ba_{0,2})_{0,65} Mg_{0,35}]_{0,98} (Ga_{0,65} B_{0,35})_2] X_4 : Eu_{0,02}$$

L'invention a également pour objet un procédé de préparation des composés de formule I, selon lequel on fait subir au moins un traitement thermique à une température comprise entre 700°C et 900°C en milieu sulfurant à un mélange de composés d'au moins un alcalino-terreux, du gallium, du bore et de l'europium.

Les composés sont choisis de préférence parmi les oxydes, sulfures, carbonates, chlorure.

Le milieu sulfurant est de préférence constitué par un courant de $H_2S$.

Selon un mode de réalisation particulier, on opère en présence de carbone de façon à parfaire la réduction de l'europium de l'état trivalent à l'état divalent. Ceci peut se faire pratiquement en disposant les divers composés dans une nacelle en carbone.

Les composés selon l'invention de formule (I) dans laquelle M représente le calcium émettent dans le vert jaune.

Les composés où M représente le strontium émettent dans le vert.

Quand M représente le baryum, l'émission a lieu dans le vert bleu.

Les luminophores selon l'invention sont utilisables dans les écrans cathodoluminescents mono et multichromes destinés à l'affichage et à la visualisation d'informations graphiques, alphanumériques ou autres. On peut les employer soit seuls, dans les cas d'application où leur couleur d'émission est conforme à celle requise, notamment les oscilloscopes, soit comme composante primaire dans les écrans mono et multichromes, et en particulier les tubes dits à pénétration et les tubes de télévision noir et blanc, et couleur.

Sous excitation photonique, les matériaux selon l'invention peuvent être utilisés dans des systèmes colorés correspondant à leur émission propre ou pour la correction de couleur. On peut citer à titre d'exemples non limitatifs les lampes et tubes fluorescents.

Il est à noter que pour tous les composés de formule I selon l'invention, les caractéristiques d'émission sous excitation cathodique sont identiques à celles sous excitation photonique.

Lorsque M représente plus d'un métal alcalino-terreux, on obtient une couleur intermédiaire entre le vert jaune et le vert bleu. Pour le vert, la chromaticité la plus favorable correspond à M représentant Sr et Ba dans la proportion de 80 % de Sr pour 20 % de Ba. C'est ainsi que l'utilisation de ce composé comme composant verte d'un écran de télévision multichrome avec les luminophores habituellement utilisés comme composante bleue (ZnS:Ag) et comme composante rouge $(Y_2 O_2 S:E_u^{3+})$ permet, comme les thiogallates de l'art antérieur, d'étendre les possibilités de reproduction des couleurs tout en ayant une persistance brève. Comme cela sera illustré plus loin, un avantage important apporté par les composés selon l'invention par rapport aux thiogallates de l'art antérieur réside dans l'obtention d'une émission plus intense. Un autre avantage tout aussi important sur le plan économique est que ces composés selon l'invention demandent une mise en oeuvre d'une quantité moindre de gallium qui est un produit très cher.

Parmi les autres avantages inhérents aux composés selon l'invention, on peut citer la tenue de l'émission aux fortes densités de courant d'excitation cathodique; ceci présente un intérêt particulier dans la mesure où la résolution des images télévisées peut être améliorée en diminuant le diamètre du faisceau d'électrons excitateur. On peut citer aussi l'exploitation possible des positions spectrales de l'excitation et de l'émission, lorsque l'on va successivement du calcium au strontium, puis au baryum pour réaliser des cascades lumineuses appropriées aux décalages de spectres de longueurs d'ondes courtes vers des longueurs d'ondes plus élevées. C'est en particulier le cas pour ajuster un rayonnement incident à la réponse des photodétecteurs dont il est bien connu que les maxima de sensibilité se situent, en longueur d'onde, vers la limite supérieure du spectre visible.

D'autres caractéristiques et avantages de l'invention apparaitront plus clairement à la lecture des exemples qui vont suivre et qui ne sauraient en aucune manière être considérés comme une limitation de l'invention.

Example 1:

Préparation d'un composé selon l'invention de formule:

$$(A_1)[[(Sr_{0,80} Ba_{0,20})_{0,65} Mg_{0,35}]_{0,98}$$
$$(Ga_{0,65} B_{0,35})_2]X_4:Eu_{0,02}$$

On broie intimement en mortier d'agathe automatique pendant 1 heure:

— 2,5073 g de $Sr CO_3$
— 0,8380 g de $Ba CO_3$
— 0,4609 g de $MgO$
— 0,1173 g de $Eu_2 O_3$
— 1,4427 g de $H_3 BO_3$
— $Ga_2O_3$:4,0608 g

On étale ce mélange en couche mince d'au maximum 1 cm dans une nacelle en carbone vitreux qui est introduite à température ambiante, dans un four tubulaire. On établit un balayage d'argon U.

Un premier traitement thermique est alors entrepris selon le programme suivant:

— 3 h à 300°C sous balayage d'argon
— $\frac{1}{2}$ h à 3 h à 600°C sous balayage d'$H_2S$
— 2 h à 820—850°C sous balayage d'$H_2S$

avec montée et descente à l'inertie du four (~500°C/h) sous balayage d'argon U et sortie du produit à four froid.

Après un nouveau broyage pendant 1 h en mortier automatique, le produit de réaction subit un second traitement thermique dans les conditions précédentes et selon le programme:

— 2 h à 820—900°C sous balayage d'$H_2S$

avec montée et descente en température à l'inertie du four sous balayage d'argon U et sortie du produit à four froid.

On obtient 9 g de produit $(A_1)$ jaune.
Le produit est broyé puis tamisé à 40 $\mu$m.

La spectrométrie d'arc confirme la présence de bore et de magnésium dans le composé obtenu.

Exemple 2:

Exemple comparatif.

On prépare, selon la technique décrite dans l'Exemple 1, un composé selon l'art antérieur de formule:

$$(Sr_{0,80} Ba_{0,20})_{0,98} Ga_2X_4:Eu_{0,02} \quad (B_1)$$

En partant de
3,1591 g de Sr CO$_3$
1,0557 g de Ba CO$_3$
0,0961 g de Eu$_2$ O$_3$
5,1164 g de Ga$_2$ O$_3$

On obtient 10 g de composé B$_1$ beaucoup moins jaune que le composé A$_1$.

Emission sous excitation cathodique
(15 kV, 1 $\mu$A/cm$^2$):

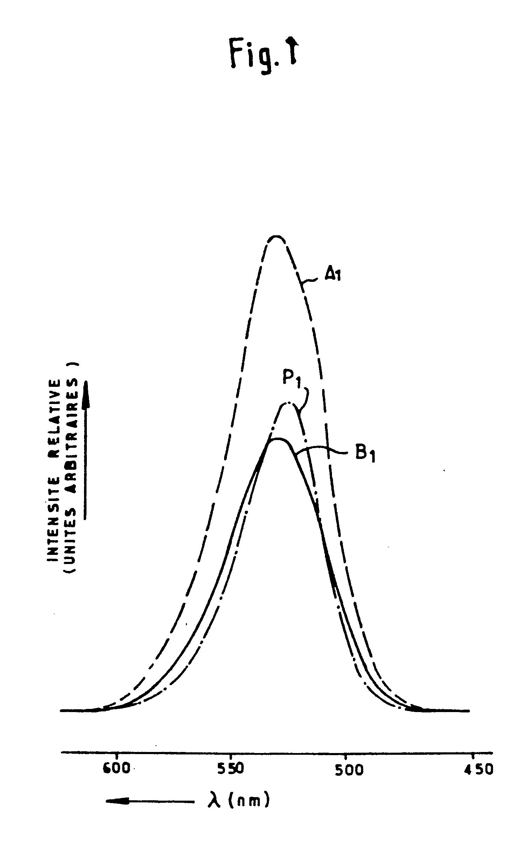

La figure 1 compare pour les produits A$_1$ (invention), B$_1$ (art antérieur) et P$_1$ (Poudre commercialisée sous l'appellation Jedec P$_1$) l'intensité d'émission. On constate que le produit selon l'invention présente une intensité d'émission beaucoup plus forte que les deux produits de l'art antérieur.

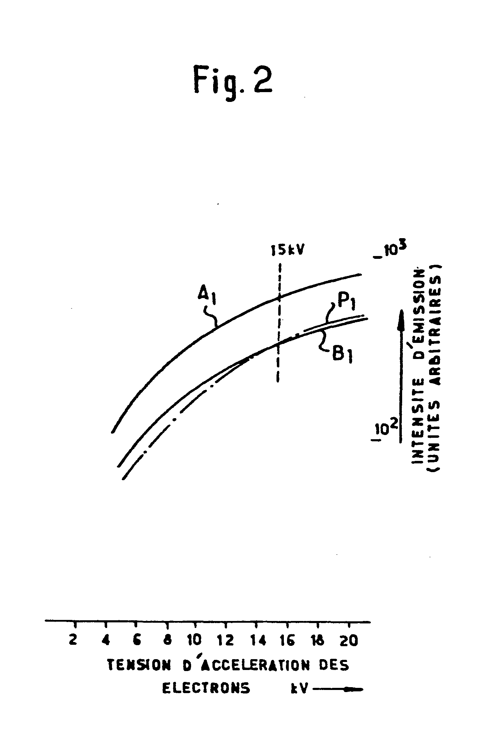

La figure 2 compare l'intensité d'émission des mêmes composés A$_1$, B$_1$, et P$_1$ pour diverses valeurs de la tension d'accélération du faisceau d'électrons excitateur (densité de courant constante=1 $\mu$A/cm$^2$).

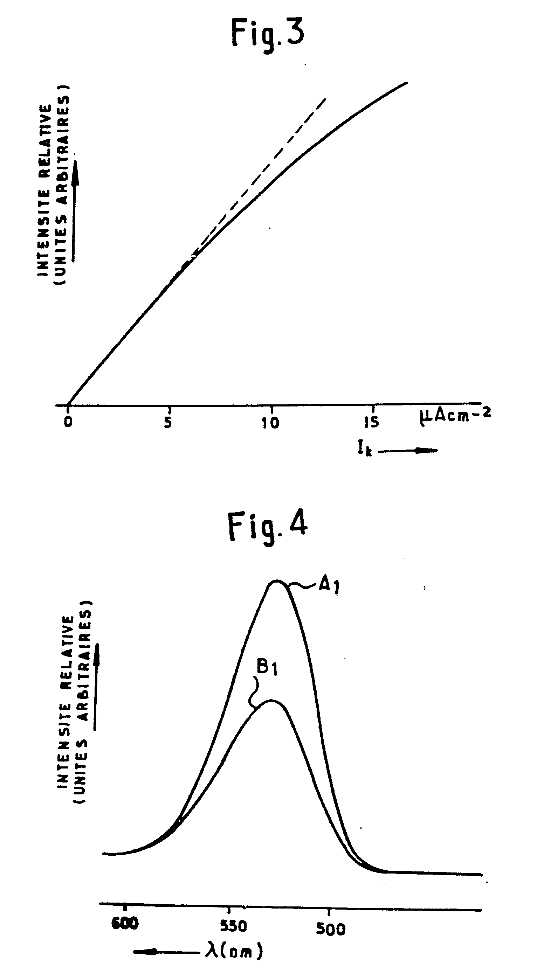

La figure 3 montre qu'aux fortes densités de courant d'excitation la réponse du luminophore A$_1$ s'écarte peu de la linéarité (15 kW).

Emission sous excitation ultra-violette
(lampe deuterium et Xénon).

La figure 4 montre clairement que l'intensité d'émission est plus forte pour le composé A$_1$ que poue le composé B$_1$.

La figure 5 représente les spectres d'excitation à la longueur d'onde d'émission de 530 nm des produits A$_1$ et B$_1$. La supériorité du produit A$_1$ apparait nettement.

Exemple 3:
Préparation d'un composé selon l'invention de formule:

$$[(Ca_{0.65} Mg_{0.35})_{0.98} (Ga_{0.65} B_{0.35})_2] X_4:Eu_{0.02} \quad (A_2)$$

On opère comme dans l'exemple 1 (mais en effectuant seulement le premier traitement thermique décrit) en partant de:

— 1,453 g de Ca CO$_3$
— 0,3153 g de MgO
— 0,080 g de Eu$_2$ O$_3$
— 2,779 g de Ga$_2$ O$_3$
— et 0,987 g de H$_3$ BO$_3$.

On obtient 5 g du produit A$_2$ jaune.

Exemple 4:
Exemple comparatif.

On prépare selon la technique décrite dans l'exemple 3, un composé selon l'art antérieur, de formule:

$$Ca_{0.98} Ga_2 X_4:Eu_{0.02} \quad (B_2)$$

en partant de:

— 1,8697 g de Ca CO$_3$
— 0,0671 g de Eu$_2$O$_3$
— et 3,5733 g de Ga$_2$ O$_3$

On obtient un produit B$_2$ moins jaune que le produit A$_2$.

Emission sous excitation cathodique
(15 kV, 1 $\mu$A/cm$^2$)

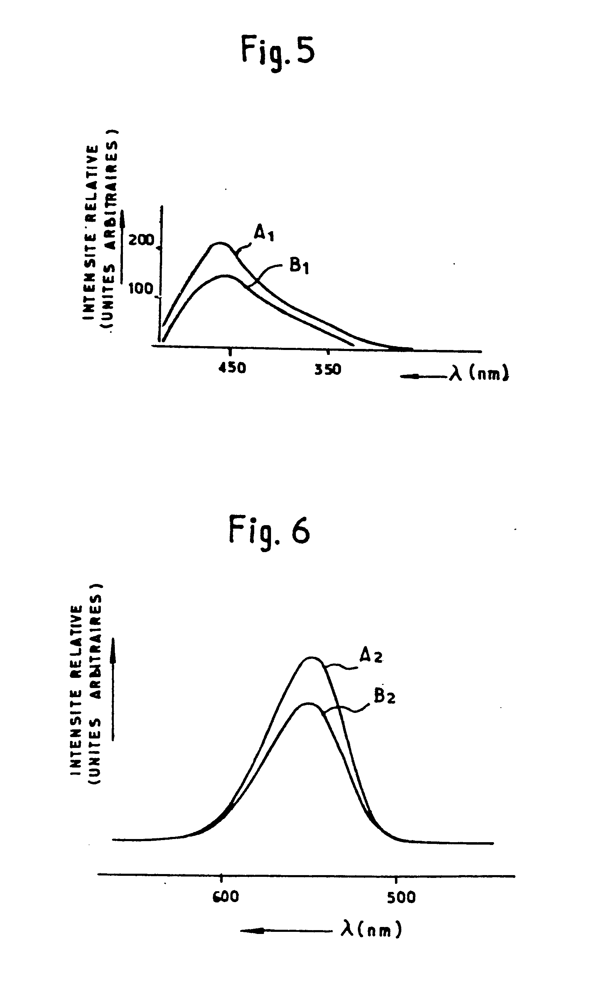

La figure 6 montre que l'intensité d'émission est plus forte dans le cas du composé A$_2$ (selon l'invention) que dans celui du composé B$_2$ (art antérieur).

Emission sous excitation U.V.
(lampe deuterium et Xénon)

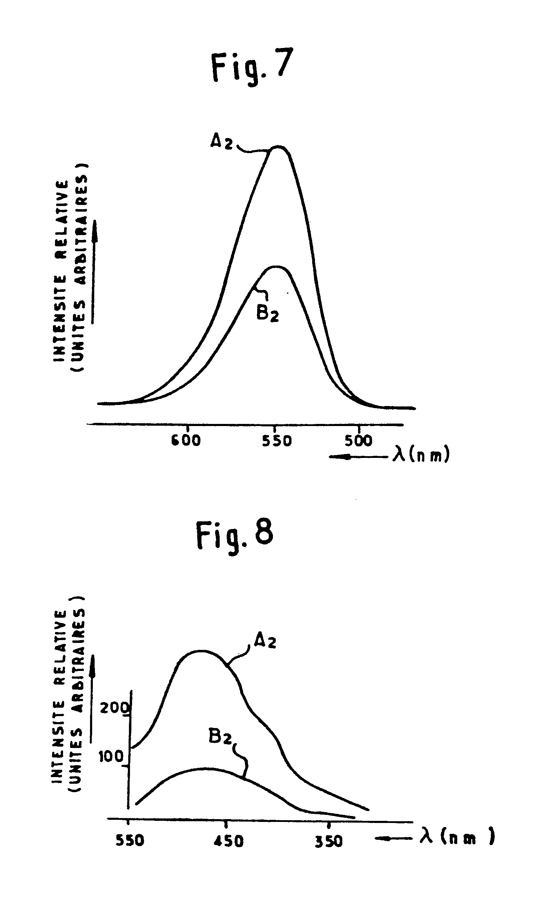

La figure 7 montre encore que l'émission est plus intense dans le cas du composé A$_2$ que dans celui du composé B$_2$.
La figure 8 représentant les spectres d'excitation à 555 nm confirme la supériorité du produit A$_2$.

Exemple 5:
Préparation d'un composé selon l'invention de formule:

$$[[(Sr_{0.80} Ba_{0.20})_{0.50} Mg_{0.50}]_{0.98} (Ga_{0.50} B_{0.50})_2]X_4:Eu_{0.02}$$

On opère comme dans l'exemple 1 à partir de:

— 2,1305 g de Sr CO$_3$
— 0,7120 g de Ba CO$_3$
— 0,7273 g de MgO
— 0,1296 g de Eu$_2$O$_3$
— 3,4506 g de Ga$_2$ O$_3$
— 2,2767 g de H$_3$ BO$_3$.

On obtient un produit jaune A$_3$.

Exemple 6:
Exemple comparatif.
On compare le produit A$_3$ selon l'exemple 5 et le produit de l'Art antérieur B$_1$ préparé selon l'exemple 2.

Emission sous excitation cathodique
(15 kV, 1 $\mu$A/cm$^2$)

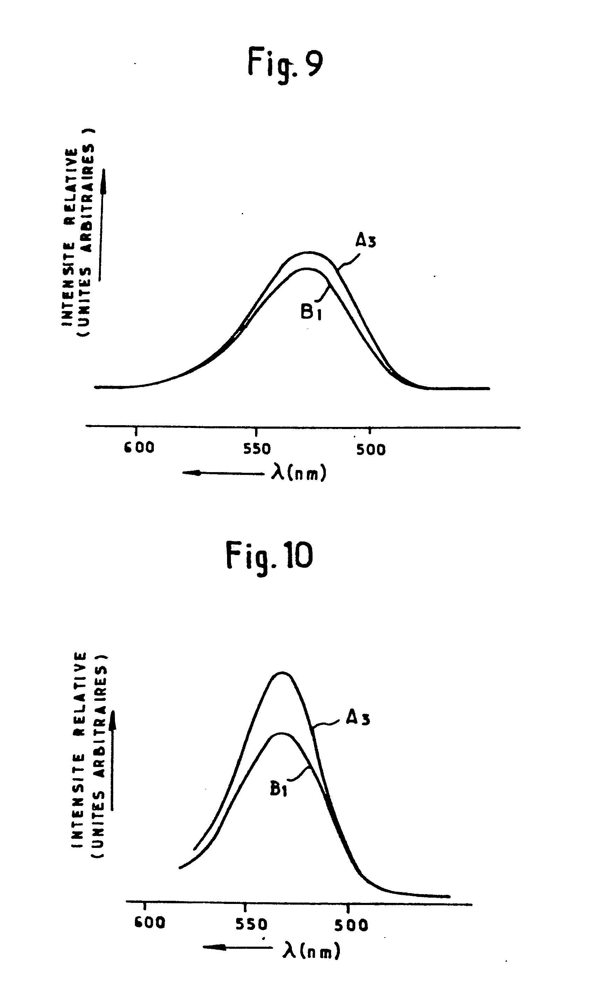

La figure 9 montre qu'une économie appréciable de gallium peut être faite tout en conservant une intensité d'émission supérieure à celle du produit B$_1$.

Emission sous excitation UV
(lampe deuterium).
Les mêmes remarques que ci-dessus s'appliquent à la figure 10.

**Revendications**

1) Substance luminescente constituée par un thiogallate alcalino-terreus activé par l'europium caractérisée en ce qu'elle répond à la formule générale:

$$[(M_{1-y} Mg_y)_{1-d} \cdot a\ (Ga_{1-z} B_z)_2]\ X_{1+3a}:Eu_d \tag{I}$$

dans laquelle

M représente au moins un élément alcalino-terreux choisi parmi le groupe comprenant Ca, Sr et Ba

y est supérieur ou égal à 0 et inférieur ou égal à 0,7 $(0,0 \leqslant y \leqslant 0,7)$

a est supérieur ou égal à 0,8 et est différent de 1 quand y=0

z est supérieur ou égal à 0 et inférieur ou égal à y $(0 \leqslant z \leqslant y)$

X représente le soufre ou un mélange de soufre et d'oxygène et d est un nombre choisi de manière à produire la luminescence recherchée quand la substance luminescente est soumise à une énergie incidente exitatrice.

2) Substance luminescente selon la Revendication 1, caractérisée en ce que

y est supérieur ou égal à 0,10 et inférieur ou égal à 0,50 $(0,10 \leqslant y \leqslant 0,50)$

a=1

z=y

et d est compris entre 0,005 et 0,20.

3) Substance luminescente selon l'une quelconque des revendications précédentes caractérisée en ce que M représente le calcium.

4) Substance luminescente selon l'une quelconque des revendications 1 et 2, caractérisée en ce que M représente le strontium.

5) Substance luminescente selon l'une quelconque des revendications 1 et 2, caractérisée en ce que M représente le baryum.

6) Substance luminescente selon l'une quelconque des revendications 1 et 2, caractérisé en ce que M représente $Sr_{1-x} Ba_x$ où $0 < x < 1$.

7) Substance luminescente selon les revendications 2 et 6, caractérisée en ce qu'elle répond à la formule:

$$[[(Sr_{0,8} Ba_{0,2})_{0,65} Mg_{0,35}]_{0,98} (Ga_{0,65} B_{0,35})_2]X_4:Eu_{0,02}$$

8) Procédé de préparation d'une substance selon l'une quelconque des revendications précédentes, caractérisé en ce qu'on fait subir au moins un traitement thermique à une température comprise entre 700°C et 900°C en milieu sulfurant à un mélange de composés d'au moins un alcalino-terreux, du gallium, du bore et de l'europium.

9) Procédé selon la revendication 8, caractérisé en ce que les composés des alcalino-terreux, gallium, bore et europium sont choisis parmi le groupe comprenant les oxydes, sulfures, carbonates, chlorures.

10) Procédé selon la revendication 8, caractérisé en ce que le milieu sulfurant est constitué par un courant de $H_2S$.

11) Procédé selon l'une quelconque revendications 8, 9 et 10, caractérisé en ce que l'on opère en présence de carbone.

12) Application des substances luminescentes selon l'une quelconque des revendications 1 à 7 aux écrans cathodoluminescents mono et multichrome.

**Patentansprüche**

1. Lumineszierender Stoff, bestehend aus einem durch Europium aktivierten Erdalkalithiogallat, gekennzeichnet durch die allgemeine Formel

$$[(M_{1-y}Mg_y)_{1-d} \cdot a \cdot (Ga_{1-z}B_z)_2]X_{1+3a}:Eu_d \tag{I}$$

in der

M mindestens ein Erdalkalielement aus der Ca, Sr und Ba umfassenden Gruppe darstellt

y größer oder gleich 0 und kleiner oder gleich 0,7 $(0,0 \leqslant y \leqslant 0,7)$ ist

a einen Wert größer oder gleich 0,8 zeigt und ungleich 1 ist, wenn y=0 ist

z größer oder gleich 0 und kleiner oder gleich y ist $(0 \leqslant z \leqslant y)$

X Schwefel oder ein Gemisch von Schwefel und Sauerstoff darstellt und d eine Zahl ist, die derart ausgewählt ist, um die gewünschte Lumineszenz zu erreichen, wenn die lumineszierende Substanz einer einfallenden Erregerenergie unterworfen wird.

2. Lumineszierender Stoff nach Anspruch 1, dadurch gekennzeichnet, daß

y größer oder gleich 0,10 und kleiner oder gleich 0,50 $(0,10 \leqslant y \leqslant 0,50)$,

a=1 und z=y ist und d zwischen 0,005 und 0,20 liegt.

3. Lumineszierender Stoff nach einem der vorstehenden Ansprüche, dadurch gekennzeichnet, daß M Calcium darstellt.

4. Lumineszierender Stoff nach einem der Ansprüche 1 und 2, dadurch gekennzeichnet, daß M Strontium darstellt.

5. Lumineszierender Stoff nach einem der Ansprüche 1 und 2, dadurch gekennzeichnet, daß M Barium darstellt.

6. Lumineszierender Stoff nach einem der Ansprüche 1 und 2, dadurch gekennzeichnet, daß M

$$Sr_{1-x}Ba_x$$

darstellt, wobei $0 < x < 1$ ist.

7. Lumineszierender Stoff nach den Ansprüchen 2 und 6, gekennzeichnet durch die Formel:

$$[[(Sr_{0,8}Ba_{0,2})_{0,65}Mg_{0,35}]_{0,98} (Ga_{0,65}B_{0,35})_2]X_4:Eu_{0,02}$$

8. Verfahren zur Herstellung eines Stoffes nach einem der Vorstehenden Ansprüche, dadurch gekennzeichnet, daß man eine Mischung aus mindestens einer Erdalkali-, einer Gallium-, einer Bor- und einer Europiumverbindung mindestens einer thermischen Behandlung bei einer Temperatur zwischen 700°C und 900°C in einem mit Schwefel verbindenden Milieu unterwirft.

9. Verfahren nach Anspruch 8, dadurch gekennzeichnet, daß die Erdalkali-, Gallium-, Bor- und Europiumverbindungen aus der die Oxide, Sulfide, Carbonate und Chloride umfassenden Gruppe ausgewählt sind.

10. Verfahren nach Anspruch 8, dadurch gekennzeichnet, daß das mit Schwefel verbindende Milieu aus einem H$_2$S-Strom besteht.

11. Verfahren nach einem der Ansprüche 8, 9 und 10, dadurch gekennzeichnet, daß man in Gegenwart von Kohlenstoff arbeitet.

12. Verwendung von lumineszierenden Stoffen nach einem der Ansprüche 1 bis 7 für ein- oder mehrfarbige cathodenlumineszierende Bildschirme.

## Claims

1) Luminescent substance consisting of an alkaline earth metal thiogallate activated by europium, characterised in that it corresponds to the general formula:

$$[(M_{1-y}Mg_y)_{1-d} \cdot a(Ga_{1-z}B_z)_2]X_{1+3a}:Eu_d \quad (I)$$

in which M represents at least one alkaline earth element chosen from the group comprising Ca, Sr and Ba, y is greater than or equal to 0 and less than or equal to 0.7 ($0.0 \leqslant y \leqslant 0.7$), a is greater than or equal to 0.8 and is different from 1 when y=0, z is greater than or equal to 0 and less than or equal to y ($0 \leqslant z \leqslant y$), X represents sulphur or a mixture of sulphur and oxygen and d is a number chosen so as to produce the desired luminescence when the luminescent substance is subjected to an exciting incident energy.

2) Luminescent substance according to Claim 1, characterised in that y is greater than or equal to 0.10 and less than or equal to 0.50 ($0.10 \leqslant y \leqslant 0.50$), a=1, z=y and d is between 0.005 and 0.20.

3) Luminescent substance according to either one of the preceding claims, characterised in that M represents calcium.

4) Luminescent substance according to either one of Claims 1 and 2, characterised in that M represents strontium.

5) Luminescent substance according to either one of Claims 1 and 2, characterised in that M represents barium.

6) Luminescent substance according to either one of Claims 1 and 2, characterised in that M represents $Sr_{1-x}Ba_x$, in which $0 < x < 1$.

7) Luminescent substance according to Claims 2 and 6, characterised in that it corresponds to the formula:

$$[[(Sr_{0.8}Ba_{0.2})_{0.65}Mg_{0.35}]_{0.98}(Ga_{0.65}B_{0.35})_2]X_4:Eu_{0.02}$$

8) Process for the preparation of a substance according to any one of the preceding claims, characterised in that a mixture of compounds of at least one alkaline earth metal, gallium, boron and europium is subjected to at least one heat treatment at a temperature between 700°C and 900°C, in a sulphurising medium.

9) Process according to Claim 8, characterised in that the compounds of the alkaline earth metals, gallium, boron and europium are chosen from amongst the group comprising the oxides, sulphides, carbonates and chlorides.

10) Process according to Claim 8, characterised in that the sulphurising medium consists of a stream of H$_2$S.

11) Process according to any one of Claims 8, 9 and 10, characterised in that the reaction is carried out in the presence of carbon.

12) Application of the luminescent substances according to any one of Claims 1 to 7 to monochromatic and polychromatic cathodoluminescent screens.

0 012 635

Fig. 1

# Fig. 2

# Fig. 3

# Fig. 4

## Fig. 5

## Fig. 6

Fig. 7

Fig. 8

5

# Fig. 9

INTENSITE RELATIVE (UNITES ARBITRAIRES)

A₃

B₁

600    550    500

$\lambda(nm)$

# Fig. 10

INTENSITE RELATIVE (UNITES ARBITRAIRES)

A₃

B₁

600    550    500

$\lambda(nm)$